# EUROPÄISCHE PATENTANMELDUNG

(11) **EP 4 234 184 A1**
(43) Veröffentlichungstag der Anmeldung: **30.08.2023**
(21) Anmeldenummer: 23155565.7
(22) Anmeldetag: 08.02.2023
(51) Int. Cl.: B25J 15/04

(54) **WERKZEUGSYSTEM FÜR EINEN ROBOTER, WERKZEUGMODUL UND VERFAHREN ZUM BETREIBEN EINES WERKZEUGSYSTEMS**

(30) Priorität: 10.02.2022 DE 102022103178
(71) Anmelder: Deutsches Zentrum für Luft- und Raumfahrt e.V., 53227 Bonn (DE)
(72) Erfinder: Weitschat, Roman, 82234 Weßling (DE); Butsch, Dimitri, 82234 Weßling (DE); Brusamento, Donato, 82234 Weßling (DE); Cremer, Jan, 82234 Weßling (DE)
(74) Vertreter: Ege Lee & Roider Patentanwälte

(57) **Zusammenfassung**

Werkzeugsystem aufweisend ein mit einem Roboter (100) verbindbares Antriebsmodul (102) und einen Werkzeugmodulsatz mit mehreren wechselbar mit dem Antriebsmodul (102) verbindbaren Werkzeugmodulen (104), bei dem das Antriebsmodul (102) eine roboterseitige Schnittstelle, eine werkzeugmodulseitige Schnittstelle und einen Antrieb mit wenigstens einem Antriebselement zum Antreiben eines mit dem Antriebsmodul (102) verbundenen Werkzeugmoduls (104) aufweist, wobei das wenigstens eine Antriebselement dazu ausgelegt und/oder angeordnet ist, an einem mit dem Antriebsmodul (102) verbundenen Werkzeugmodul (104) bedarfsweise eine rotatorische Wirkleistung und/oder eine translatorische Wirkleistung zu bewirken, Werkzeugmodul (104) zur Verwendung in einem derartigen Werkzeugsystem und Verfahren zum Betreiben eines derartigen Werkzeugsystems, wobei beim Verwenden eines Werkzeugmoduls (104) eine Arbeitsleistung von dem Antriebsmodul (102) zur Verfügung gestellt wird.

## Beschreibung

Die Erfindung betrifft ein Werkzeugsystem aufweisend ein mit einem Roboter verbindbares Antriebsmodul und einen Werkzeugmodulsatz mit mehreren wechselbar mit dem Antriebsmodul verbindbaren Werkzeugmodulen. Außerdem betrifft die Erfindung Werkzeugmodul und ein Verfahren zum Betreiben eines Werkzeugsystems.

Das Dokument DE 10 2012 022 252 A1 betrifft eine Antriebseinheit für einen Werkzeugwechsler, aufweisend einen Wechselkopf, einen Wechseladapter sowie eine Verriegelungskontur mit einem Verriegelungs- und Betätigungskonus, wobei der Verriegelungs- und Betätigungskonus verschieblich gelagert und mittels einer Betätigungsstange bewegbar ist und wobei als Antrieb für die Betätigungsstange ein elektrischer Aktuator vorgesehen ist. Um Werkzeuge automatisch wechseln sowie in einfacher Weise kuppeln und entkuppeln zu können und dabei sicherzustellen, dass die Werkzeuge während des Betriebs sicher am Träger eines Handhabungssystems befestigt bleiben und dass eine sichere und effiziente sowie kostengünstige Energieversorgung gewährleistet ist, wird mit dem Dokument DE 10 2012 022 252 A1 vorgeschlagen, den elektrischen Aktuator in den Wechselkopf integriert auszubilden.

Aus dem Dokument WO 2021/053188 A1 ist eine Greiferbacke für einen Robotergreifer bekannt, die eine erste mit dem Robotergreifer korrespondierende Greiferbackenschnittstelle und eine zweite mit Werkzeugen eines Werkzeugsatzes korrespondierende Greiferbackenschnittstelle aufweist, wobei die Greiferbackenschnittstellen jeweils als mechanische Schnittstelle, als Signalschnittstelle und/oder als Leistungsschnittstelle dienen.

Aus dem Dokument US 4,897,014 A ist eine Vorrichtung bekannt zum Auswechseln von Werkzeugen an einem mechanischen Manipulatorarm. Diese Vorrichtung umfasst eine männliche Verriegelungskonuseinheit, eine weibliche Aufnahmekonuseinheit mit einem daran befestigten Werkzeug und eine Motoreinheit. Die Motoreinheit umfasst Mittel zur axialen Verbindung mit dem Werkzeug, um es zu betreiben, Mittel zur Befestigung der Motoreinheit an der männlichen Aufnahmekonuseinheit und eine Grundplatte. Die Vorrichtung kann mit jeder Art von Manipulatorarmen verwendet werden, die mit einer Vielzahl von trennbaren Werkzeugen arbeiten müssen. Verschiedene Manipulatorarme weisen eine Vielzahl von Befestigungs- und Bewegungsanordnungen für die Befestigung und die Manipulation einer am Manipulatorarm befestigten Vorrichtung auf.

Aus dem Dokument US 5,131,706 A ist ein Parallelgreiferwerkzeug- und - wechsleranordnung bekannt. Diese Anordnung umfasst ein Drehaktuator, einen mechanischen Drehfolger und einen Werkzeugwechsler. Der Drehaktuator kann an einem Roboterarm angebracht werden. Der Drehfolger ist mit dem Drehaktuator verbunden und wird von diesem angetrieben, um einen ersten und einen zweiten konzentrischen Ausgang bereitzustellen. Der Werkzeugwechsler wird von dem ersten Ausgang angetrieben, um Werkzeuge zu erfassen oder freizugeben. Der zweite Ausgang dient zum Antreiben eines mit dem Werkzeugwechsler verbundenen Werkzeugs.

Der Erfindung liegt die Aufgabe zugrunde, ein eingangs genanntes Werkzeugsystem strukturell und/oder funktionell zu verbessern. Außerdem liegt der Erfindung die Aufgabe zugrunde, ein eingangs genanntes Werkzeugmodul strukturell und/oder funktionell zu verbessern. Außerdem liegt der Erfindung die Aufgabe zugrunde, ein eingangs genanntes Verfahren strukturell und/oder funktionell zu verbessern.

Die Aufgabe wird gelöst mit einem Werkzeugsystem mit den Merkmalen des Anspruchs 1. Außerdem wird die Aufgabe gelöst mit einem Werkzeugmodul mit den Merkmalen des Anspruchs 9. Außerdem wird die Aufgabe gelöst mit einem Verfahren mit den Merkmalen des Anspruchs 10. Vorteilhafte Ausführungen und/oder Weiterbildungen sind Gegenstand der abhängigen Ansprüche.

"Werkzeugsystem" bezeichnet vorliegend insbesondere eine strukturell und/oder funktionell abgrenzbare Vorrichtung, die das Antriebsmodul und den Werkzeugmodulsatz umfasst. Die Werkzeugmodule des Werkzeugmodulsatzes können verschiedene Funktionen aufweisen. Die Werkzeugmodule des Werkzeugmodulsatzes können insbesondere aufgrund ihrer Möglichkeit zur wechselbaren Verbindung mit dem Antriebsmodul zusammen mit dem Antriebsmodul als zusammengehörig betrachtet werden.

Der Roboter kann eine Roboterbasis, einen Manipulator und eine Kontrolleinrichtung aufweisen. Die Kontrolleinrichtung kann programmierbar sein. Der Roboter kann antreibbare Glieder und/oder Gelenke aufweisen. Der Roboter kann Sensoren aufweisen. Der Roboter kann einen mithilfe einer Kinematik beschreibbaren mechanischen Aufbau aufweisen. Der Roboter und/oder die Kinematik können/kann Bewegungsachsen aufweisen. Die Bewegungsachsen können rotatorische und/oder translatorische Achsen sein. Der Roboter kann eine offene Kinematik aufweisen. Alle Bewegungsachsen des Roboters und/oder der Kinematik können hintereinander liegen. Die Bewegungsachsen des Roboters und/oder der Kinematik können eine kinematische Kette bilde. Dem Roboter kann ein Tool Center Point (TCP) zugeordnet sein. Der TCP kann ein Zielsystem sein, für das die aus einer gestellten Aufgabe resultierenden Positionieranforderungen gelten. Der TCP kann ein Ende der kinematischen Kette bilden. Aufgabenspezifisch kann der TCP auch außerhalb des Roboters liegen. Dem Roboter kann ein Werkzeugkoordinatensystem zugeordnet sein. Das Werkzeugkoordinatensystem kann durch den TCP definiert sein. Das Werkzeugkoordinatensystem kann ein räumliches kartesisches Koordinatensystem mit einer x-Achse, einer y-Achse und einer z-Achse sein. Der Roboter kann ein Industrieroboter sein. Der Roboter kann einen Roboterflansch aufweisen. Der Roboterflansch kann zum Aufnehmen des Antriebsmoduls ausgelegt sein. Der Roboterflansch kann sich im Wesentlichen in einer durch die x-Achse und die y-Achse aufgespannten oder in einer zur x-Achse und zur y-Achse parallelen Ebene erstrecken. Die z-Achse kann sich senkrecht zum Roboterflansch erstrecken. Die z-Achse mittig durch den Roboterflansch verlaufen.

Das Antriebsmodul und ein Werkzeugmodul des Werkzeugmodulsatzes können zusammen einen funktionsfähigen Effektor bilden. Das Antriebsmodul und ein Werkzeugmodul des Werkzeugmodulsatzes können zusammen einen Endeffektor des Roboters bilden. Der Endeffektor kann das letzte Glied der kinematischen Kette bilden.

Das Antriebsmodul kann zum Verbinden mit einem Roboter, insbesondere mit einem Roboterflansch, ausgelegt sein. Das Antriebsmodul kann derart mit einem Roboter verbindbar sein, dass ein bestimmungsgemäßes Verwenden des Antriebsmoduls ermöglicht ist. Das Antriebsmodul kann mit einem Roboter, insbesondere mit einem Roboterflansch, fest verbindbar sein. Eine feste Verbindung ist in diesem Zusammenhang insbesondere eine Verbindung, die bei einer Verwendung wechselnder Werkzeugmodule des Werkzeugmodulsatzes bestehen bleibt. Das Antriebsmodul kann an einem Roboter, insbesondere an einem Roboterflansch, montierbar und/oder demontierbar, insbesondere verschraubbar, sein. Das Antriebsmodul kann eine Längsachse aufweisen. Das Antriebsmodul kann zu seiner Längsachse zumindest annähernd rotationssymmetrisch ausgeführt sein. Das Antriebsmodul kann derart mit einem Roboter verbindbar sein, dass die Längsachse des Antriebsmoduls dann koaxial zur z-Achse des Werkzeugkoordinatensystems angeordnet ist.

Die roboterseitige Schnittstelle kann dazu ausgelegt sein, mit einem Roboter zusammenzuwirken. Die roboterseitige Schnittstelle kann zur mechanischen Verbindung, zur Signalübertragung und/oder zur Leistungsübertragung ausgelegt sein. Die roboterseitige Schnittstelle kann einen Anschlussflansch aufweisen. Der Anschlussflansch der roboterseitigen Schnittstelle und ein Roboterflansch können miteinander kompatibel sein.

Die werkzeugmodulseitige Schnittstelle kann dazu ausgelegt sein, mit einem Werkzeugmodul des Werkzeugmodulsatzes zusammenzuwirken. Die werkzeugmodulseitige Schnittstelle kann zur mechanischen Verbindung, zur Signalübertragung und/oder zur Leistungsübertragung ausgelegt sein. "Wechselbar verbindbar" bedeutet in diesem Zusammenhang insbesondere, dass diese Verbindung bei Verwendung eines Werkzeugmoduls des Werkzeugmodulsatzes gesperrt und zum Wechseln von Werkzeugmodulen des Werkzeugmodulsatzes freigegeben werden kann.

Das Antriebsmodul kann eine Antriebsmodulbasis aufweisen. Die roboterseitige Schnittstelle kann an der Antriebsmodulbasis angeordnet sein. Die werkzeugmodulseitige Schnittstelle kann an der Antriebsmodulbasis angeordnet sein. Die roboterseitige Schnittstelle und die werkzeugmodulseitige Schnittstelle können an einander gegenüberliegenden Enden der Antriebsmodulbasis angeordnet sein. Die Antriebsmodulbasis kann eine zylinderartige Form aufweisen. Die Antriebsmodulbasis kann ein Gehäuse für den Antrieb bilden. Der Antrieb kann innerhalb der Antriebsmodulbasis angeordnet und/oder aufgenommen sein.

Das Antriebsmodul und jeweils ein Werkzeugmodul des Werkzeugmodulsatzes können mithilfe eines Roboters und/oder manuell miteinander verbindbar und/oder voneinander lösbar sein. Das Antriebsmodul und jeweils ein Werkzeugmodul des Werkzeugmodulsatzes können automatisiert und/oder manuell miteinander verbindbar und/oder voneinander lösbar sein. Das Antriebsmodul kann als Adapter ausgelegt sein. Das Antriebsmodul kann als zwischen einem Roboter einerseits und jedem der Werkzeugmodule des Werkzeugmodulsatzes andererseits wirksamer Adapter ausgelegt sein. Das Antriebsmodul kann auch als General-Werkzeugadapter oder GenToolAdapter bezeichnet werden.

Der Antrieb kann zum Aufbringen einer mechanischen Antriebsleistung ausgelegt und/oder angeordnet sein. Als "Antriebsleistung" ist vorliegend insbesondere eine antriebsseitige mechanische Leistung bezeichnet. Der Antrieb kann ein Rotationsantrieb sein. Die Antriebsleistung kann ein Antriebsmoment und/oder eine Antriebsdrehzahl umfassen. Der Antrieb kann eine Antriebsachse aufweisen. Der Antrieb kann mit seiner Antriebsachse koaxial zur Längsachse des Antriebsmoduls angeordnet sein. Der Antrieb kann an der Antriebsmodulbasis abgestützt sein. Der Antrieb kann an der Antriebsmodulbasis gelagert sein. Der Antrieb kann einen Motor aufwiesen. Der Motor kann als Elektromotor ausgeführt sein. Der Motor bzw. der Elektromotor kann eine Drehachse aufweisen. Der Motor bzw. der Elektromotor kann mit seiner Drehachse koaxial zur Antriebsachse angeordnet sein. Der Antrieb kann wenigstens ein Antriebselement aufweisen. Das wenigstens eine Antriebselement kann eine Hauptachse aufweisen. Das wenigstens eine Antriebselement kann mit seiner Hauptachse koaxial oder parallel zur Antriebsachse angeordnet sein. Das wenigstens eine Antriebselement kann ein motorseitiges Ende und ein Antriebsende aufweisen. Der Motor bzw. der Elektromotor und das wenigstens eine Antriebselement können miteinander zum Übertragen einer mechanischen Antriebsleistung verbunden sein. Der Motor bzw. der Elektromotor und das wenigstens eine Antriebselement können dazu ausgelegt und/oder angeordnet sein, ein mit dem Antriebsmodul verbundenes Werkzeugmodul mit einer mechanischen Antriebsleistung zu beaufschlagen. Der Antrieb kann ein Vorschaltgetriebe aufweisen. Das Vorschaltgetriebe kann zwischen dem Motor und dem Antriebselement wirksam sein. Das Vorschaltgetriebe kann dazu ausgelegt und/oder angeordnet sein, eine Antriebsleistung, insbesondere ein Antriebsmoment und/oder eine Antriebsdrehzahl, zu wandeln. Das Vorschaltgetriebe kann wenigstens eine Übersetzungsstufe aufweisen. Das Vorschaltgetriebe kann mehrere Übersetzungsstufen aufweisen. Das Vorschaltgetriebe kann schaltbar sein.

Das Antriebselement kann dazu ausgelegt und/oder angeordnet sein, an einem mit dem Antriebsmodul verbundenen Werkzeugmodul eine rotatorische Wirkleistung zu bewirken, wenn das mit dem Antriebsmodul verbundenen Werkzeugmodul zur rotatorischen Wirkbewegung ausgelegt ist, und an einem mit dem Antriebsmodul verbundenen Werkzeugmodul eine translatorische Wirkleistung zu bewirken, wenn das mit dem Antriebsmodul verbundenen Werkzeugmodul zur translatorischen Wirkbewegung ausgelegt ist.

Das wenigstens eine Antriebselement kann dazu ausgelegt und/oder angeordnet sein, an einem mit dem Antriebsmodul verbundenen Werkzeugmodul eine rotatorische Wirkleistung um eine zur Hauptachse koaxiale oder parallele Rotationsachse, eine rotatorische Wirkleistung um eine zur Hauptachse schräge Rotationsachse, eine translatorische Wirkleistung entlang einer zur Hauptachse koaxialen oder parallelen Linearachse und/oder eine translatorische Wirkleistung entlang einer zur Hauptachse schrägen Linearachse zu bewirken. Als "Wirkleistung" ist vorliegend insbesondere eine werkzeugmodulseitige mechanische Leistung bezeichnet. Die Wirkleistung kann auch als "Arbeitsleistung" bezeichnet werden. Die Wirkleistung kann eine rotatorische Leistung sein. Die Wirkleistung kann ein Wirkmoment und/oder eine Wirkdrehzahl umfassen. Die Wirkleistung kann eine translatorische Leistung sein. Die Wirkleistung kann eine Wirkkraft und/oder eine Wirkgeschwindigkeit umfassen. Das wenigstens eine Antriebselement kann als Bewegungsgetriebeelement ausgelegt und/oder angeordnet sein.

Das wenigstens eine Antriebselement kann als Antriebswelle und/oder Gewindespindel ausgeführt sein. Das wenigstens eine Antriebselement kann ein als kombinierte Antriebswelle/Gewindespindelausgeführt sein. Das wenigstens eine Antriebselement kann als Gewindespindel mit einem Antriebsende zum kraft- und/oder formschlüssigen Übertragen einer mechanischen Antriebsleistung ausgeführt sein.

Der Werkzeugmodulsatz kann mehrere unterschiedliche Werkzeugmodule umfassen. Der Werkzeugmodulsatz kann wenigstens zwei Werkzeugmodule umfassen. Mehrere Werkzeugmodule des Werkzeugmodulsatzes können in einem Werkzeugmagazin lagerbar oder gelagert sein. Jeweils ein Werkzeugmodul des Werkzeugmodulsatzes kann mit dem Antriebsmodul verbindbar sein.

Die Werkzeugmodule des Werkzeugmodulsatzes können zum Verbinden mit dem Antriebsmodul ausgelegt sein. Die Werkzeugmodule des Werkzeugmodulsatzes können derart mit einem Antriebsmodul verbindbar sein, dass ein bestimmungsgemäßes Verwenden eines mit dem Antriebsmodul verbundenen Werkzeugmoduls ermöglicht ist. Eine Verbindung zwischen dem Antriebsmodul und einem mit dem Antriebsmodul verbundenen Werkzeugmodul kann verriegelbar und/oder freigebbar sein. Eine Verbindung zwischen dem Antriebsmodul und einem an dem Antriebsmodul angeordnete Werkzeugmodul kann verriegelbar sein, um ein mit dem Antriebsmodul verbundenen Werkzeugmodul zu verwenden. Eine Verbindung zwischen dem Antriebsmodul und einem mit dem Antriebsmodul verbundenen Werkzeugmodul kann freigebbar sein, um ein mit dem Antriebsmodul verbundenen Werkzeugmodul zu wechseln.

Die Werkzeugmodule des Werkzeugmodulsatzes können jeweils eine Längsachse aufweisen. Die Werkzeugmodule des Werkzeugmodulsatzes können jeweils zu ihrer Längsachse zumindest annähernd rotationssymmetrisch ausgeführt sein. Die Werkzeugmodule des Werkzeugmodulsatzes können jeweils derart mit dem Antriebsmodul verbindbar sein, dass die Längsachse des Werkzeugmodules dann koaxial Längsachse des Antriebsmoduls angeordnet ist.

Die Werkzeugmodule des Werkzeugmodulsatzes können jeweils eine Werkzeugmodulbasis aufweisen. Die Werkzeugmodule des Werkzeugmodulsatzes können jeweils eine der werkzeugmodulseitigen Schnittstelle des Antriebsmoduls zugeordnete Werkzeugmodulschnittstelle aufweisen. Die Werkzeugmodulschnittstelle eines Werkzeugmoduls kann an der Werkzeugmodulbasis angeordnet sein. Die Werkzeugmodule des Werkzeugmodulsatzes können jeweils einen Wirkabschnitt aufweisen. Die Werkzeugmodulschnittstelle und der Wirkabschnitt können an einander gegenüberliegenden Enden der Werkzeugmodulbasis eines Werkzeugmoduls angeordnet sein. Die Werkzeugmodulbasis eines Werkzeugmoduls kann eine zylinderartige Form aufweisen. Die Werkzeugmodulbasis eines Werkzeugmoduls kann ein Gehäuse bilden. Wenigstens ein Werkzeugmodul des Werkzeugmodulsatzes kann wenigstens ein Werkzeugantriebselement aufweisen. Das wenigstens eine Werkzeugantriebselement kann mit dem Antriebselement des Antriebsmoduls zusammenwirken. Das wenigstens eine Werkzeugantriebselement kann mit dem Antriebselement des Antriebsmoduls zum Übertragen und/oder Wandeln einer Bewegung und/oder einer mechanischen Antriebsleistung zusammenwirken. Das wenigstens eine Werkzeugantriebselement kann innerhalb der Werkzeugmodulbasis angeordnet und/oder aufgenommen sein.

Das wenigstens eine Werkzeugantriebselement kann als Bewegungsgetriebeelement ausgelegt und/oder angeordnet sein. Das wenigstens eine Werkzeugantriebselement kann zusammen mit dem Antriebselement des Antriebsmoduls ein Bewegungsgetriebe bilden. Das Bewegungsgetriebe kann dazu ausgelegt und/oder angeordnet sein, eine Antriebsleistung zu übertragen. Das Bewegungsgetriebe kann dazu ausgelegt und/oder angeordnet sein, eine Antriebsleistung in eine Wirkleistung zu wandeln. Das Bewegungsgetriebe kann dazu ausgelegt und/oder angeordnet sein, eine Antriebsdrehzahl in eine Wirkdrehzahl zu wandeln. Das Bewegungsgetriebe kann dazu ausgelegt und/oder angeordnet sein, ein Antriebsmoment in ein Wirkmoment oder in eine Wirkgeschwindigkeit zu wandeln. Das Bewegungsgetriebe kann dazu ausgelegt und/oder angeordnet sein, eine rotatorische Antriebsbewegung in eine translatorische Wirkbewegung zu wandeln.

Der Antrieb, der Motor, das Vorschaltgetriebe und/oder das Bewegungsgetriebe können/kann dazu ausgelegt und/oder angeordnet sein, eine Wirkleistung mit einer niedrigen Drehzahl und einem hohen Drehmoment, insbesondere für ein zum Greifen ausgelegtes Werkzeugmodul, ein zur Fluidapplikation ausgelegtes Werkzeugmodul und/oder ein zum Schrauben ausgelegtes Werkzeugmodul, bereitzustellen. Der Antrieb, der Motor, das Vorschaltgetriebe und/oder das Bewegungsgetriebe können/kann dazu ausgelegt und/oder angeordnet sein, eine Wirkleistung mit einer hohen Drehzahl und einem niedrigen Drehmoment, insbesondere für ein zum Zerspanen ausgelegtes Werkzeugmodul, bereitzustellen. Der Antrieb, der Motor, das Vorschaltgetriebe und/oder das Bewegungsgetriebe können/kann dazu ausgelegt und/oder angeordnet sein, eine rotatorische Wirkleistung um eine zur Hauptachse koaxiale oder parallele Rotationsachse, eine rotatorische Wirkleistung um eine zur Hauptachse schräge Rotationsachse, eine translatorische Wirkleistung entlang einer zur Hauptachse koaxialen oder parallelen Linearachse und/oder eine translatorische Wirkleistung entlang einer zur Hauptachse schrägen Linearachse zu bewirken.

Die Werkzeugmodule des Werkzeugmodulsatzes können jeweils ohne gesonderten Motor ausgeführt sein. Das Antriebsmodul kann ein aktives Modul bilden. Die Werkzeugmodule des Werkzeugmodulsatzes können passive Module bilden. Die Bezeichnungen "aktiv" und "passiv" beziehen sich in diesem Zusammenhang insbesondere auf das Vorhandensein oder Nichtvorhandensein eines Motors.

Der Werkzeugmodulsatz kann wenigstens ein Werkzeugmodul mit einer rotatorischen Wirkbewegung um eine zur Hauptachse parallele Rotationsachse, wenigstens ein Werkzeugmodul mit einer rotatorischen Wirkbewegung um eine zur Hauptachse schräge Rotationsachse, wenigstens ein Werkzeugmodul mit einer translatorischen Wirkbewegung entlang einer zur Hauptachse parallelen Linearachse und/oder wenigstens ein Werkzeugmodul mit einer translatorischen Wirkbewegung entlang einer zur Hauptachse schrägen Linearachse umfassen.

Der Werkzeugmodulsatz kann wenigstens ein zum Greifen ausgelegtes Werkzeugmodul, wenigstens ein zur Fluidapplikation ausgelegtes Werkzeugmodul, wenigstens ein zum Zerspanen ausgelegtes Werkzeugmodul und/oder wenigstens ein zum Schrauben ausgelegtes Werkzeugmodul umfassen.

Werkzeugmodule des Werkzeugmodulsatzes können jeweils zumindest abschnittsweise unterschiedliche Werkzeugmodulschnittstellen aufweisen. Die werkzeugmodulseitige Schnittstelle des Antriebsmoduls kann dazu ausgelegt sein, mit unterschiedlichen Werkzeugmodulschnittstellen der Werkzeugmodule des Werkzeugmodulsatzes zusammenzuwirken. Die werkzeugmodulseitige Schnittstelle des Antriebsmoduls kann mit unterschiedlichen Werkzeugmodulschnittstellen der Werkzeugmodule des Werkzeugmodulsatzes kompatibel sein. Die werkzeugmodulseitige Schnittstelle des Antriebsmoduls kann mit jeder Werkzeugmodulschnittstelle der Werkzeugmodule des Werkzeugmodulsatzes kompatibel sein. Jede Werkzeugmodulschnittstelle der Werkzeugmodule des Werkzeugmodulsatzes kann mit der werkzeugmodulseitigen Schnittstelle des Antriebsmoduls kompatibel sein. Die werkzeugmodulseitige Schnittstelle kann als Universalschnittstelle für alle Werkzeugmodulen des Werkzeugmodulsatzes ausgelegt sein. Die werkzeugmodulseitige Schnittstelle kann als Universalschnittstelle mit allen Werkzeugmodulen des Werkzeugmodulsatzes kompatibel sein.

Die werkzeugmodulseitige Schnittstelle des Antriebsmoduls kann zum Verriegeln und/oder Freigeben einer Verbindung zwischen dem Antriebsmodul und einem Werkzeugmodul ausgelegt sein. Die werkzeugmodulseitige Schnittstelle des Antriebsmoduls kann zum kraft- und/oder formschlüssigen Übertragen einer mechanischen Arbeitsleistung ausgelegt sein.

Zusammenfassend und mit anderen Worten dargestellt ergibt sich somit durch die Erfindung unter anderem ein General-Werkzeugadapter für flexibles Roboter End-of Arm Tooling.

Mit dem GenToolAdapter kann eine generelle Roboterwerkzeugbasis an einen Roboter geschraubt werden, mit der unterschiedliche Werkzeuge verbunden werden können. Die Werkzeugbasis kann über einen Motor-Getriebe-Aktuator mit einer Spindel bzw. geometrischer Kopplung am Spindelende verbunden sein, welche einzelne Werkzeugbits koppeln kann. Eine Drehbewegung der Spindel kann unterschiedliche Aktionen durchführen: Zahnraddrehbewegung, z.B. um Greifer zu schließen; Hubbewegung einer Spindelmutter, z.B. um etwas zu pressen, einen Spritzenzylinder hoch und runter zu bewegen, ein Schneidwerkzeug zu aktuieren und vieles mehr; Schrauberbit in eine Drehbewegung versetzen zum Schrauben/sämtliche Dremel^{®}-ähnliche Tätigkeiten, wie Schneiden, Schleifen, Polieren und vieles mehr. Dadurch kann nur ein Motor-Getriebe-System erforderlich sein, welches immer mit gleicher Hardware und Kommunikation angesteuert werden kann. Es wird Gewicht gespart, weil für die passiven Bits ein eigener Elektromotor entfallen kann. Ein externes zusätzliches Wechselsystem kann entfallen. Der Werkzeugwechsel kann schnell und einfach und sehr kostengünstig durchgeführt werden.

Die Erfindung kann sich insbesondere durch folgende Merkmale auszeichnen: Gehäuse zur Kopplung mit dem Roboter, Motor mit Getriebeübersetzung, Spindel/Schneckentrieb, geometrische Kopplung GenTool-Basisadapter mit GenTool-Werkzeugbit, unterschiedliche Werkzeugbits; Keine externen Wechselsysteme; Bitsystem - Werkzeug; Spindeldrehung erzeugt Stirnraddrehung, Hubmechanismus bzw. Drehbewegung; Eine aktive Steuereinheit, passive Werkzeugbits zur Kopplung.

Mit der Erfindung wird eine Verwendung wechselnder Effektoren vereinfacht. Ein Aufwand, wie Zeitaufwand, Hardwareaufwand, Softwareaufwand und/oder Kostenaufwand, werden/wird reduziert. Ein Gewicht und/oder ein Energiebedarf werden/wird reduziert.

Nachfolgend werden Ausführungsbeispiele der Erfindung unter Bezugnahme auf Figuren näher beschrieben, dabei zeigen schematisch und beispielhaft:
- Fig. 1: einen Roboter mit einem Antriebsmodul eines Werkzeugsystems,
- Fig. 2: einen Roboter mit einem Antriebsmodul und einem Werkzeugmodul eines Werkzeugsystems,
- Fig. 3: ein Antriebsmodul eines Werkzeugsystems in axonometrischer Ansicht,
- Fig. 4: ein Antriebsmodul eines Werkzeugsystems in axonometrischer Ansicht,
- Fig. 5: ein Antriebsmodul eines Werkzeugsystems in Schnittansicht,
- Fig. 6: ein Verbinden eines Antriebsmoduls und eines Werkzeugmoduls eines Werkzeugsystems,
- Fig. 7: ein miteinander verbundenes Antriebsmodul und Werkzeugmodul eines Werkzeugsystems,
- Fig. 8: einen mit einem Antriebsmodul und einem zum Greifen ausgelegten Werkzeugmodul eines Werkzeugsystems gebildeten Endeffektor in axonometrischer Ansicht,
- Fig. 9: einen mit einem Antriebsmodul und einem zum Greifen ausgelegten Werkzeugmodul eines Werkzeugsystems gebildeten Endeffektor in Schnittansicht,
- Fig. 10: einen mit einem Antriebsmodul und einem zur Fluidapplikation ausgelegten Werkzeugmodul eines Werkzeugsystems gebildeten Endeffektor in axonometrischer Ansicht,
- Fig. 11: einen mit einem Antriebsmodul und einem zur Fluidapplikation ausgelegten Werkzeugmodul eines Werkzeugsystems gebildeten Endeffektor in Schnittansicht,
- Fig. 12: einen mit einem Antriebsmodul und einem zum Schrauben ausgelegten Werkzeugmodul eines Werkzeugsystems gebildeten Endeffektor in axonometrischer Ansicht und
- Fig. 13: einen mit einem Antriebsmodul und einem zum Schrauben ausgelegten Werkzeugmodul eines Werkzeugsystems gebildeten Endeffektor in Schnittansicht.

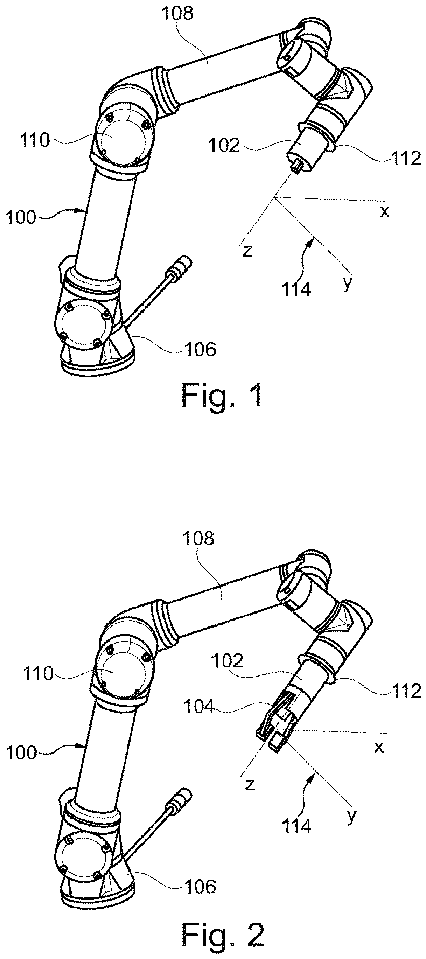

Fig. 1 zeigt einen Roboter 100 mit einem Antriebsmodul 102 eines Werkzeugsystems. Fig. 2 zeigt den Roboter mit dem Antriebsmodul 102 und einem Werkzeugmodul 104 des Werkzeugsystems. Der Roboter 100 ist vorliegend als Gelenkarmroboter ausgeführt und weist eine Roboterbasis 106, einen Manipulator mit antreibbaren Gliedern, wie Glied 108, antreibbaren Gelenken, wie Gelenk 110, und einem Roboterflansch 112 und eine Robotersteuerung auf. Dem Roboter 100 ist ein Werkzeugkoordinatensystem 114 mit einer x-Achse, einer y-Achse und einer z-Achse zugeordnet.

Das Antriebsmodul 102 weist eine roboterseitige Schnittstelle, eine werkzeugmodulseitige Schnittstelle und einen Antrieb auf. Die roboterseitige Schnittstelle und die werkzeugmodulseitige Schnittstelle sind jeweils zur mechanischen Verbindung, zur Signalübertragung und zur Leistungsübertragung ausgelegt. Das Antriebsmodul 102 ist mit seiner roboterseitigen Schnittstelle mit dem Roboterflansch 112 fest verbunden und mithilfe der Robotersteuerung kontrollierbar. Das Werkzeugmodul 104 ist mit der werkzeugmodulseitigen Schnittstelle des Antriebsmoduls 102 wechselbar verbunden und mithilfe des Antriebs des Antriebsmoduls 102 antreibbar.

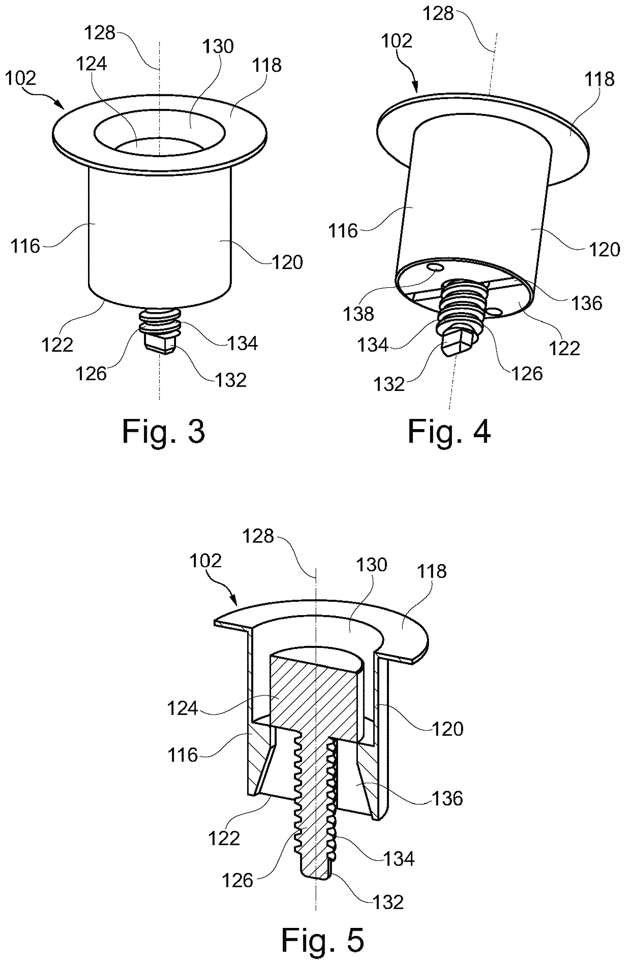

Fig. 3 zeigt das Antriebsmodul 102 in axonometrischer Ansicht, Fig. 4 zeigt ein Antriebsmodul 102 in axonometrischer Ansicht, Fig. 5 zeigt das Antriebsmodul 102 in Schnittansicht.

Das Antriebsmodul 102 weist eine zylinderförmige Antriebsmodulbasis 116 mit einem Anschlussflansch 118, einem Wandabschnitt 120 und einem Bodenabschnitt 122 und einen Antrieb 124 mit einem Elektromotor, einem Getriebe und einem Antriebselement 126 auf. Das Antriebsmodul 102 weist eine Längsachse 128 auf. Der Wandabschnitt 120 und der Bodenabschnitt 122 begrenzen einen Aufnahmeraum 130, die Antriebsmodulbasis 116 bildet damit ein Gehäuse für den Antrieb 124. Das Antriebselement 126 ist als kombinierte Antriebswelle/Gewindespindel mit einer zur Längsachse 128 koaxialen Hauptachse, einem Antriebsende 132 zum kraft- und/oder formschlüssigen Übertragen einer mechanischen rotatorischen Wirkleistung um eine zur Hauptachse koaxiale Rotationsachse und einem Bewegungsgewinde 134 zum kraft- und/oder formschlüssigen Übertragen einer mechanischen translatorischen Wirkleistung entlang einer zur Hauptachse koaxialen Linearachse ausgeführt.

Das Antriebselement 126 ist durch den Bodenabschnitt 122 aus der Antriebsmodulbasis 116 herausgeführt. In dem Bodenabschnitt 122 sind Ausnehmungen, wie Ausnehmung 136, vorgesehen, die einen Zugang zu dem Bewegungsgewinde 134 ermöglichen. Werkzeugmodulseitig weist das Antriebsmodul 102 Ausnehmungen, wie Ausnehmung 138, zur kraft- und/oder formschlüssigen Verbindung mit einem Werkzeugmodul des Werkzeugsystems auf.

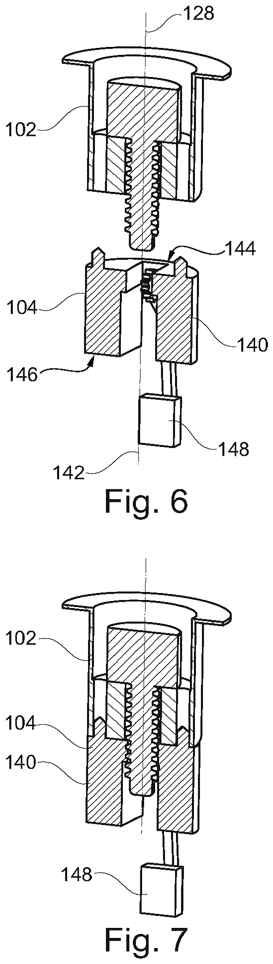

Fig. 6 zeigt ein gegenseitiges Verbinden des Antriebsmoduls 102 und des Werkzeugmoduls 104 des Werkzeugsystems. Das Werkzeugmodul 104 weist eine Werkzeugmodulbasis 140 mit einer Längsachse 142, einem antriebsmodulseitigen Ende 144, an dem eine der werkzeugmodulseitigen Schnittstelle des Antriebsmoduls 102 zugeordnete Werkzeugmodulschnittstelle angeordnet ist, und einem wirkabschnittseitigen Ende 146, an dem Wirkabschnitte, wie Wirkabschnitt 148, angeordnet sind, auf.

Zum Verbinden des Antriebsmoduls 102 und des Werkzeugmoduls 104 wird das mit dem Roboter fest verbundene Antriebsmodul 102 durch entsprechendes Bewegen des Roboters bzw. des Manipulators mit seiner werkzeugmodulseitigen Schnittstelle zu der Werkzeugmodulschnittstelle geführt und die werkzeugmodulseitige Schnittstelle des Antriebsmoduls 102 und die Werkzeugmodulschnittstelle werden in Erstreckungsrichtung der z-Achse des Werkzeugkoordinatensystems bzw. in Erstreckungsrichtung der Längsachse 128 des Antriebsmoduls 102 und der Längsachse 142 des Werkzeugmoduls 104 zusammengefügt bzw. miteinander verbunden. Anschließend wird die Verbindung zur Verwendung des Werkzeugmoduls 104 verriegelt. Fig. 7 zeigt das Antriebsmodul 102 und das Werkzeugmodul 104 des Werkzeugsystems in miteinander verbundenem Zustand. In miteinander verbundenem Zustand bilden das Antriebsmodul 102 und das Werkzeugmodul 104 einen Endeffektor 150 des Roboters.

Ein Wechseln der Werkzeugmodule des Werkzeugmodulsatzes erfolgt in umgekehrter Reihenfolge, indem zunächst die Verbindung zwischen dem Antriebsmodul 102 und einem mit diesem verbundenen Werkzeugmodul, wie Werkzeugmodul 104, freigegeben und nachfolgend das Werkzeugmodul von dem Antriebsmodul 102 gelöst und entfernt wird.

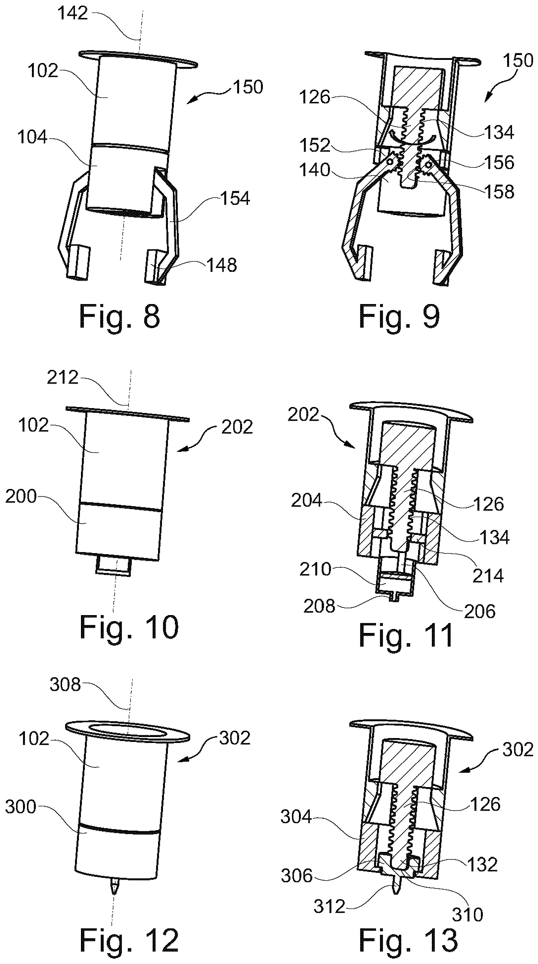

Fig. 8 zeigt den mit dem Antriebsmodul 102 und dem zum Greifen ausgelegten Werkzeugmodul 104 des Werkzeugsystems gebildeten Endeffektor 150 in axonometrischer Ansicht. Fig. 9 zeigt den Endeffektor 150 in Schnittansicht. Die Werkzeugmodulbasis 140 weist eine zylinderartige bzw. hülsenartige Form auf und begrenzt einen Aufnahmeraum 152, in den das Antriebselement 126 mit seinem Bewegungsgewinde 134 hineinragt und in dem das Antriebselement 126 gelagert ist. An der Werkzeugmodulbasis 140 sind Greifarme, wie Greifarm 154, um senkrecht zur Längsachse 142 angeordnete Schwenkachsen, wie Schwenkachse 156, verschwenkbar gelagert. Die Greifarme 154 weisen jeweils ein Ende, an dem ein Wirkabschnitt, wie Wirkabschnitt 148, angeordnet ist, und ein Ende, an dem ein Zahnabschnitt, wie Zahnabschnitt 158, angeordnet ist, auf. Die Zahnabschnitte 158 greifen in das Bewegungsgewinde 134 ein.

Ein Antreiben des Antriebselements 126 bewirkt damit an dem mit dem Antriebsmodul 102 verbundenen Werkzeugmodul 104 eine rotatorische Wirkleistung um Schwenkachsen 156, sodass die Wirkabschnitte 148 aufeinander zu und/oder voneinander weg beaufschlagt bzw. bewegt werden können, um ein Greifobjekt zu greifen, zu halten und/oder loszulassen.

Fig. 10 zeigt einen mit dem Antriebsmodul 102 und einem zur Fluidapplikation ausgelegten Werkzeugmodul 200 des Werkzeugsystems gebildeten Endeffektor 202 in axonometrischer Ansicht. Fig. 11 zeigt den Endeffektor 202 in Schnittansicht. Das Werkzeugmodul 200 weist eine zylinderförmige bzw. hülsenförmige Werkzeugmodulbasis 204, ein Kolbenelement 206 und eine Spritzdüse 208 auf. Die Werkzeugmodulbasis 204 und das Kolbenelement 206 begrenzen einen zu der Spritzdüse 208 geöffneten Aufnahmeraum 210 für ein zu applizierendes Fluid. Das Kolbenelement 206 ist an der Werkzeugmodulbasis 204 entlang einer Längsachse 212 des Werkzeugmoduls 200 verlagerbar geführt und weist einen Zahnabschnitt 214 auf, der in das Bewegungsgewinde 134 des Antriebselements 126 eingreift.

Ein Antreiben des Antriebselements 126 bewirkt damit an dem mit dem Antriebsmodul 102 verbundenen Werkzeugmodul 200 eine translatorische Wirkleistung entlang der Längsachse 212, sodass das Kolbenelement 206 in Erstreckungsrichtung der Längsachse 212 beaufschlagt bzw. bewegt und ein Volumen des Aufnahmeraum 210 verändert werden kann, um den Aufnahmeraum 210 mit einem zu applizierenden Fluid zu füllen und/oder ein zu applizierendes Fluid durch die Spritzdüse 208 auszupressen. Im Übrigen wird ergänzend insbesondere auf Fig. 1 bis Fig. 9 und die zugehörige Beschreibung verwiesen.

Fig. 12 zeigt einen mit einem Antriebsmodul 102 und einem zum Schrauben ausgelegten Werkzeugmodul 300 eines Werkzeugsystems gebildeten Endeffektor 302 in axonometrischer Ansicht. Fig. 13 zeigt den Endeffektor 302 in Schnittansicht. Das Werkzeugmodul 300 weist eine zylinderförmige bzw. hülsenförmige Werkzeugmodulbasis 304 und ein Drehelement 306. Das Drehelement 306 ist an der Werkzeugmodulbasis 304 um eine Längsachse 308 des Werkzeugmoduls 300 drehbar gelagert und weist einen Formabschnitt 310, in den das Antriebsende 132 des Antriebselements 126 eingreift, und einen mit einem Schraubenkopfantrieb kompatiblen Schraubendreherabschnitt 312 auf. Der Schraubendreherabschnitt 312 kann einstückiger Bestandteil des Drehelements 306 sein oder auswechselbar als Schraubbit ausgeführt sein, wobei das Drehelement 306 dann eine Bitaufnahme aufweist.

Ein Antreiben des Antriebselements 126 bewirkt damit an dem mit dem Antriebsmodul 102 verbundenen Werkzeugmodul 300 eine rotatorische Wirkleistung um die Längsachse 308, sodass das Drehelement 306 beaufschlagt werden kann, um Schrauben in Werkstoffe hinein- oder herauszuschrauben, sie festzuziehen oder zu lösen oder gegen Mitdrehen zu blockieren. Im Übrigen wird ergänzend insbesondere auf Fig. 1 bis Fig. 9 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Roboter
- 102: Antriebsmodul
- 104: Werkzeugmodul
- 106: Roboterbasis
- 108: Glied
- 110: Gelenk
- 112: Roboterflansch
- 114: Werkzeugkoordinatensystem
- 116: Antriebsmodulbasis
- 118: Anschlussflansch
- 120: Wandabschnitt
- 122: Bodenabschnitt
- 124: Antrieb
- 126: Antriebselement
- 128: Längsachse
- 130: Aufnahmeraum
- 132: Antriebsende
- 134: Bewegungsgewinde
- 136: Ausnehmung
- 138: Ausnehmung
- 140: Werkzeugmodulbasis
- 142: Längsachse
- 144: Ende
- 146: Ende
- 148: Wirkabschnitt
- 150: Endeffektor
- 152: Aufnahmeraum
- 154: Greifarm
- 156: Schwenkachse
- 158: Zahnabschnitt
- 200: Werkzeugmodul
- 202: Endeffektor
- 204: Werkzeugmodulbasis
- 206: Kolbenelement
- 208: Spritzdüse
- 210: Aufnahmeraum
- 212: Längsachse
- 214: Zahnabschnitt

- 300: Werkzeugmodul
- 302: Endeffektor
- 304: Werkzeugmodulbasis
- 306: Drehelement
- 308: Längsachse
- 310: Formabschnitt
- 312: Schraubendreherabschnitt

## Patentansprüche

1. Werkzeugsystem aufweisend ein mit einem Roboter (100) verbindbares Antriebsmodul (102) und einen Werkzeugmodulsatz mit mehreren wechselbar mit dem Antriebsmodul (102) verbindbaren Werkzeugmodulen (104, 200, 300), wobei das Antriebsmodul (102) eine roboterseitige Schnittstelle, eine werkzeugmodulseitige Schnittstelle und einen Antrieb (124) mit wenigstens einem Antriebselement (126) zum Antreiben eines mit dem Antriebsmodul (102) verbundenen Werkzeugmoduls (104, 200, 300) aufweist, **dadurch gekennzeichnet, dass** das wenigstens eine Antriebselement (126) dazu ausgelegt und/oder angeordnet ist, an einem mit dem Antriebsmodul (102) verbundenen Werkzeugmodul (104, 200, 300) bedarfsweise eine rotatorische Wirkleistung und/oder eine translatorische Wirkleistung zu bewirken.

2. Werkzeugsystem nach Anspruch 1, **dadurch gekennzeichnet, dass** das wenigstens eine Antriebselement (126) eine Hauptachse aufweist, wobei das wenigstens eine Antriebselement (126) dazu ausgelegt ist, an einem mit dem Antriebsmodul (102) verbundenen Werkzeugmodul (104, 200, 300) eine rotatorische Wirkleistung um eine zur Hauptachse koaxiale oder parallele Rotationsachse, eine rotatorische Wirkleistung um eine zur Hauptachse schräge Rotationsachse, eine translatorische Wirkleistung entlang einer zur Hauptachse koaxialen oder parallelen Linearachse und/oder eine translatorische Wirkleistung entlang einer zur Hauptachse schrägen Linearachse zu bewirken.

3. Werkzeugsystem nach wenigstens einem der vorhergehenden Ansprüche, **dadurch gekennzeichnet, dass** das wenigstens eine Antriebselement (126) als Antriebswelle und/oder Gewindespindelausgelegt ist.

4. Werkzeugsystem nach wenigstens einem der vorhergehenden Ansprüche, **dadurch gekennzeichnet, dass** das wenigstens eine Antriebselement (126) als kombinierte Antriebswelle/Gewindespindel ausgelegt ist.

5. Werkzeugsystem nach wenigstens einem der vorhergehenden Ansprüche, **dadurch gekennzeichnet, dass** der Werkzeugmodulsatz wenigstens ein Werkzeugmodul (300) mit einer rotatorischen Wirkbewegung um eine zur Hauptachse parallele Rotationsachse, wenigstens ein Werkzeugmodul (104) mit einer rotatorischen Wirkbewegung um eine zur Hauptachse schräge Rotationsachse, wenigstens ein Werkzeugmodul (200) mit einer translatorischen Wirkbewegung entlang einer zur Hauptachse parallelen Linearachse und/oder wenigstens ein Werkzeugmodul mit einer translatorischen Wirkbewegung entlang einer zur Hauptachse schrägen Linearachse umfasst.

6. Werkzeugsystem nach wenigstens einem der vorhergehenden Ansprüche, **dadurch gekennzeichnet, dass** der Werkzeugmodulsatz wenigstens ein zum Greifen ausgelegtes Werkzeugmodul (104), wenigstens ein zur Fluidapplikation ausgelegtes Werkzeugmodul (200), wenigstens ein zum Zerspanen ausgelegtes Werkzeugmodul und/oder wenigstens ein zum Schrauben ausgelegtes Werkzeugmodul (300) umfasst.

7. Werkzeugsystem nach wenigstens einem der vorhergehenden Ansprüche, **dadurch gekennzeichnet, dass** die werkzeugmodulseitige Schnittstelle des Antriebsmoduls (102) mit jedem der Werkzeugmodule (104, 200, 300) des Werkzeugmodulsatzes und jedes der Werkzeugmodule (104, 200, 300) des Werkzeugmodulsatzes mit der werkzeugmodulseitigen Schnittstelle des Antriebsmoduls (102) kompatibel ist.

8. Werkzeugsystem nach wenigstens einem der vorhergehenden Ansprüche, **dadurch gekennzeichnet, dass** die werkzeugmodulseitige Schnittstelle des Antriebsmoduls (102) zum Verriegeln und/oder Freigeben einer Verbindung zwischen dem Antriebsmodul (102) und einem Werkzeugmodul (104, 200, 300) und/oder zum kraft- und/oder formschlüssigen Übertragen einer mechanischen Antriebsleistung ausgelegt ist.

9. Werkzeugmodul (104, 200, 300), **dadurch gekennzeichnet, dass** das Werkzeugmodul (104, 200, 300) zur Verwendung in einem Werkzeugsystem nach wenigstens einem der Ansprüche 1 bis 8 ausgelegt ist.

10. Verfahren zum Betreiben eines Werkzeugsystems nach wenigstens einem der Ansprüche 1 bis 8, **dadurch gekennzeichnet, dass** beim Verwenden eines Werkzeugmoduls (104, 200, 300) des Werkzeugmodulsatzes eine Antriebsleistung von dem Antriebsmodul (102) zur Verfügung gestellt wird.
